# EUROPÄISCHE PATENTSCHRIFT

(11) **EP 2 547 584 B1**
(45) Veröffentlichungstag und Bekanntmachung des Hinweises auf die Patenterteilung: **03.05.2017**
(21) Anmeldenummer: 11716810.4
(22) Anmeldetag: 11.03.2011
(51) Int. Cl.: B64D 11/00, B64D 11/06

(54) **SITZANBAUVORRICHTUNG**
SEAT ATTACHMENT DEVICE
DISPOSITIF ACCESSOIRE DE SIÈGE

(30) Priorität: 13.03.2010 DE 102010011332
(43) Veröffentlichungstag der Anmeldung: 23.01.2013
(73) Patentinhaber: Recaro Aircraft Seating GmbH & Co. KG, 74523 Schwäbisch Hall (DE)
(72) Erfinder: HÄUßER, Markus Ottmar, 74374 Zaberfeld (DE)
(74) Vertreter: Daub, Thomas
(86) Internationale Anmeldenummer: PCT/EP2011/001216
(87) Internationale Veröffentlichungsnummer: WO 2011/116888

(56) Entgegenhaltungen:
- EP-A1- 0 626 292
- EP-A1- 0 813 340
- US-A- 5 076 524
- US-A- 5 398 991

## Beschreibung

### Stand der Technik

Die Erfindung geht aus von einer Sitzanbauvorrichtung nach dem Oberbegriff des Patentanspruchs 1.

Aus der DE 197 25 347 A1 ist bereits eine Fluggastsitzanbauvorrichtung, zur beweglichen Befestigung eines Gegenstands an einem Sitz, mit einem Tragarmstück, mit einem Geräteaufnahmestück zur Befestigung des Gegenstands, mit einem Zwischenstück zur Kopplung des Geräteaufnahmestücks mit dem Tragarmstück, sowie mit einem ersten, zwischen dem Tragarmstück und dem Zwischenstück angeordneten Gelenk, das eine erste Gelenkachse aufweist, und einem zweiten, zwischen dem Zwischenstück und dem Geräteaufnahmestück angeordneten Gelenk, das eine zweite Gelenkachse aufweist, bekannt. Die EP0813340 zeigt eine Sitzanbauvorrichtung mit den Merkmalen des Oberbegriffs des Anspruchs 1.

Der Erfindung liegt insbesondere die Aufgabe zugrunde, einen Bedienkomfort der Sitzanbauvorrichtung zu verbessern.

Diese Aufgabe ist durch eine Sitzanbauvorrichtung gemäß dem Patentanspruch 1 gelöst. Weitere vorteilhafte Ausführungen der Erfindung können den Unteransprüchen entnommen werden.

### Vorteile der Erfindung

Die Erfindung geht aus von einer Sitzanbauvorrichtung, insbesondere einer Fluggastsitzanbauvorrichtung, zur beweglichen Befestigung eines Gegenstands an einem Sitz, mit einem Tragarmstück, mit einem Geräteaufnahmestück zur Befestigung des Gegenstands, mit einem Zwischenstück zur Kopplung des Geräteaufnahmestücks mit dem Tragarmstück, sowie mit zumindest einem ersten, zwischen dem Tragarmstück und dem Zwischenstück angeordneten Gelenk, das eine erste Gelenkachse aufweist, und einem zweiten, zwischen dem Zwischenstück und dem Geräteaufnahmestück angeordneten Gelenk, das eine zweite Gelenkachse aufweist.

Es wird eine Sitzanbauvorrichtung gemäß Anspruch 1 vorgeschlagen. Dadurch kann eine Einschränkung einer Bedienbarkeit behoben werden. Insbesondere beim Vorhandensein einer weiteren Sitzanbauvorrichtung, beispielsweise zur beweglichen Befestigung eines Tisches an einem Sitz, kann die Bedienbarkeit bei gleichzeitiger Nutzung beider Sitzanbauvorrichtungen erhöht und eine Verstaubarkeit vorteilhaft verbessert werden. Weiter kann die Bedienbarkeit insbesondere bei gleichzeitiger Nutzung zweier benachbarter Sitzanbauvorrichtungen an zwei benachbarten Sitzen erhöht werden. Eine Verletzungsgefahr, insbesondere eine Quetschgefahr von Fingern eines Benutzers bei einer Bedienung, kann beseitigt werden, wodurch der Bedienkomfort verbessert werden kann. Unter "versetzen" soll insbesondere eine räumliche Trennung der ersten Gelenkachse relativ zu der zweiten Gelenkachse verstanden werden. Die beiden Gelenkachsen weisen keinen gemeinsamen Schnittpunkt auf. Zudem verlaufen die beiden Gelenkachsen vorzugsweise in verschiedenen Ebenen, d.h. sie sind nicht mittels einer gemeinsamen Ebene beschreibbar. Unter einer "Gelenkachse" soll insbesondere eine ausgezeichnete, d.h. eindeutig im Raum festlegbare und/oder bestimmbare Achse eines Gelenks verstanden werden. In diesem Zusammenhang soll unter einer "ausgezeichneten Achse" insbesondere eine gedachte, fiktive Hauptrotationsachse beliebiger Länge verstanden werden, durch die das Gelenk definiert ist. Unter einer "Projektionsrichtung" soll insbesondere eine Blickrichtung für eine Parallelprojektion verstanden werden.

Weiter wird vorgeschlagen, dass beide Gelenkachsen in zumindest einer Projektionsrichtung rechtwinklig zueinander orientiert sind. Dadurch kann eine konstruktiv vorteilhafte Ausgestaltung erreicht werden.

Ferner wird vorgeschlagen, dass das Tragarmstück eine Haupterstreckungsrichtung aufweist, zu der die zweite Gelenkachse des zweiten Gelenks in zumindest einer Projektionsrichtung versetzt angeordnet ist. Dadurch kann eine vorteilhafte Anordnung des Tragarms, bezogen auf die zweite Gelenkachse, erreicht werden. Unter einer "Haupterstreckungsrichtung" soll insbesondere eine Richtung einer Erstreckung entlang zumindest einer Seitenwand eines Körpers verstanden werden. Insbesondere soll darunter eine Richtung eines Körpers verstanden werden, entlang welcher der Körper, insbesondere die Seitenwand des Körpers, eine maximale Erstreckung aufweist.

Insbesondere ist es vorteilhaft, wenn das Zwischenstück eine Haupterstreckungsrichtung aufweist, die in zumindest einer Projektionsrichtung senkrecht zu der Haupterstreckungsrichtung des Tragarmstücks orientiert ist. Dadurch kann eine besonders vorteilhafte Anordnung des Zwischenstücks, bezogen auf das Tragarmstück, erreicht werden.

Ferner ist es vorteilhaft, wenn die erste Gelenkachse des ersten Gelenks und die Haupterstreckungsrichtung des Tragarmstücks in zumindest einer Projektionsrichtung achsparallel zueinander orientiert sind. Dadurch kann eine konstruktiv besonders vorteilhafte Ausgestaltung erreicht werden. Unter "achsparallel" soll in diesem Zusammenhang insbesondere eine parallele oder koaxiale Anordnung einer Geraden zu einer Achse verstanden werden.

Besonders bevorzugt weist das Geräteaufnahmestück eine Haupterstreckungsrichtung auf, die in zumindest einer Projektionsrichtung achsparallel zu der zweiten Gelenkachse des zweiten Gelenks orientiert ist. Dadurch kann eine besonders vorteilhaft bewegliche Befestigung des Gegenstands an dem Sitz realisiert werden.

Insbesondere ist es vorteilhaft, wenn die Haupterstreckungsrichtung des Zwischenstücks in zumindest einer Projektionsrichtung senkrecht zu der Haupterstreckungsrichtung des Geräteaufnahmestücks orientiert ist. Dadurch kann eine besonders vorteilhafte Anordnung des Zwischenstücks, bezogen auf das Geräteaufnahmestück, erreicht werden.

Weiter ist es vorteilhaft, wenn das erste Gelenk und das zweite Gelenk zumindest teilweise fest mit dem Zwischenstück verbunden sind. Dadurch kann eine Montage erleichtert werden.

Außerdem ist es vorteilhaft, wenn das zumindest erste Gelenk und das zumindest zweite Gelenk als Drehgelenke und deren Gelenkachsen als Drehachsen ausgebildet sind. Dadurch kann eine Beweglichkeit verbessert werden. Unter einer "Drehachse" soll insbesondere eine Gelenkachse verstanden werden, die eine kontinuierliche Drehbewegung oder einen begrenzten Schwenkbereich definiert.

### Zeichnung

Weitere Vorteile ergeben sich aus der folgenden Zeichnungsbeschreibung. In den Zeichnungen ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen schematisch dargestellten Sitz mit einer Armlehne und eine an die Armlehne angebundene Sitzanbauvorrichtung,
- Fig. 2: eine perspektivische Darstellung der Sitzanbauvorrichtung in einer Nutzstellung,
- Fig. 3: eine Seitenansicht der Sitzanbauvorrichtung in einer Verstaustellung,
- Fig. 4: eine Draufsicht der Sitzanbauvorrichtung und
- Fig. 5: ein Zwischenstück mit einem Versatz.

### Beschreibung des Ausführungsbeispiels

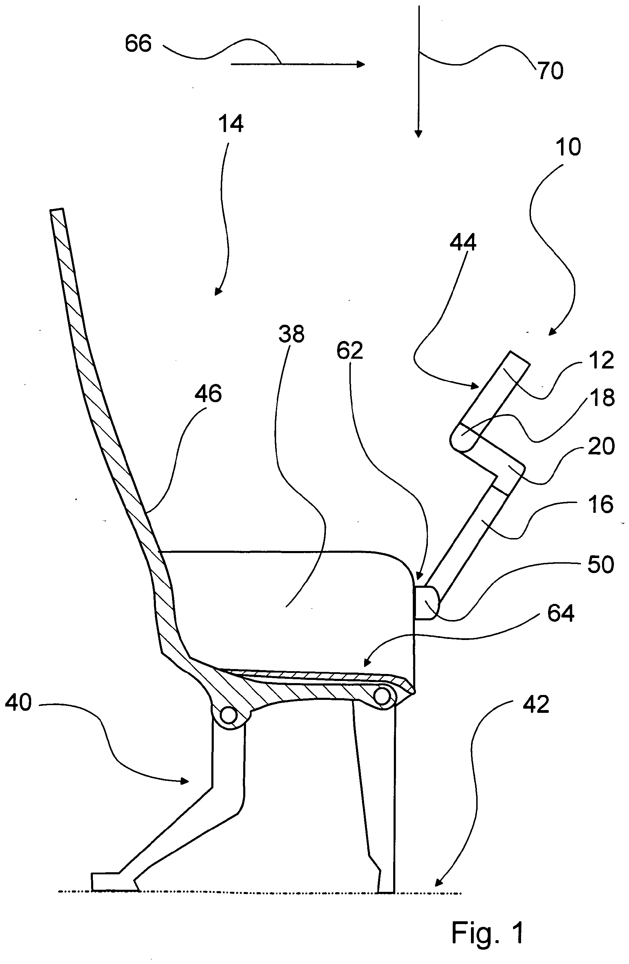

Die Figuren 1 bis 4 zeigen einen Sitz 14 mit einer erfindungsgemäßen Sitzanbauvorrichtung 10 und einem als Monitor ausgebildeten Gegenstand 12. Die Sitzanbauvorrichtung 10 ist als eine Fluggastsitzanbauvorrichtung ausgebildet. Die Sitzanbauvorrichtung 10 befestigt den Gegenstand 12 beweglich an dem Sitz 14. Der Gegenstand 12 ist als ein Monitor ausgebildet. Der Sitz 14 umfasst dabei eine Armlehne 38, an die die Sitzanbauvorrichtung 10 angebunden ist. Der Sitz 14 weist Sitzfüße 40 auf, mittels denen der Sitz 14 an einem Boden 42 eines Flugzeugs befestigt ist. Der Sitz 14 ist als ein Fluggastsitz ausgebildet. Die Armlehne 38 ist als eine Armlehnenkonsole ausgebildet.

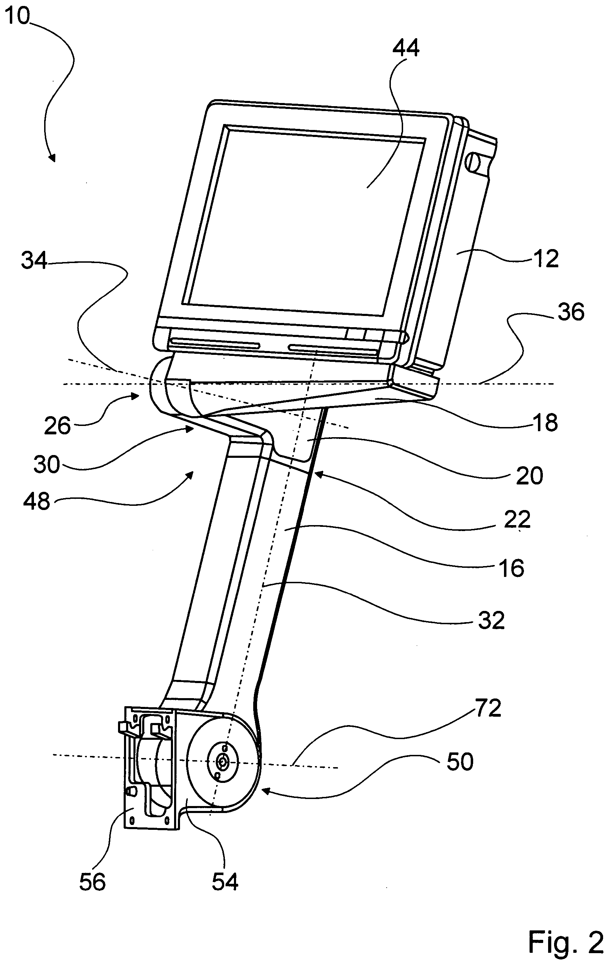

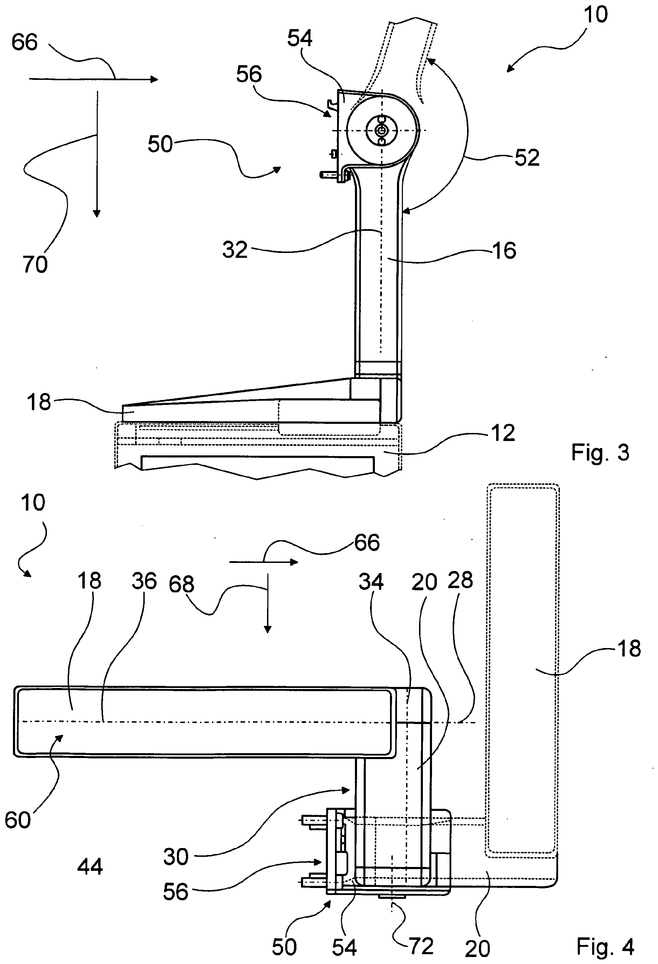

Die in den Figuren 1 und 2 dargestellte Sitzanbauvorrichtung 10 ist in einer Nutzstellung dargestellt. In der Nutzstellung kann der Gegenstand 12 von einem Benutzer, der in dem Sitz 14 sitzt, genutzt werden. In der Nutzstellung zeigt eine Bildschirmebene 44 des als Monitor ausgebildeten Gegenstands 12 in Richtung einer Rückenlehne 46 des Sitzes 14. Der auf dem Sitz 14 sitzende Benutzer hat somit den als Monitor ausgebildeten Gegenstand 12 vor sich angeordnet. Die in der Figur 3 dargestellte Sitzanbauvorrichtung 10 ist in einer Verstaustellung dargestellt. In der Verstaustellung kann der Gegenstand 12 von dem Benutzer, der in dem Sitz 14 sitzt, nicht genutzt werden. In der Verstaustellung ist der als Monitor ausgebildete Gegenstand 12 im Bereich der Sitzfüße 40 unterhalb der Armlehne 38 des Sitzes 14 angeordnet.

Die Sitzanbauvorrichtung 10 umfasst einen Tragarm 48 und ein Hauptgelenk 50. Das Hauptgelenk 50 weist eine als eine Drehachse ausgebildete Hauptgelenkachse 72 auf (vgl. Figur 2). Das Hauptgelenk 50 ist als ein Drehgelenk ausgebildet. Das Hauptgelenk 50 führt den Tragarm 48 relativ zum Sitz 14 entlang eines Schwenkbereichs 52. Der Schwenkbereich 52 bildet einen Winkelbereich aus, in dem der Tragarm 48 verschwenkbar ist. Mittels des Hauptgelenks 50 kann der Tragarm 48 in die Nutzstellung und in die Verstaustellung bewegt werden.

Das Hauptgelenk 50 weist ein Hauptgelenkgehäuse 54 auf, das zu einer Seite 56 hin geöffnet ist. Die Seite 56 des Hauptgelenkgehäuses 54 bildet eine Befestigungsvorrichtung aus, mittels der der Tragarm 48 an dem Sitz 14 befestigt ist. Die Seite 56 zur Befestigung des Hauptgelenkgehäuses 54 definiert eine Befestigungsebene. Die Hauptgelenkachse 72 des Hauptgelenks 50 verläuft parallel versetzt zu der Befestigungsebene.

Der Tragarm 48 ist dreiteilig ausgebildet. Der Tragarm 48 weist ein Tragarmstück 16, ein Zwischenstück 20 und ein Geräteaufnahmestück 18 auf. Weiter umfasst der Tragarm 48 zwei Gelenke 22, 26. Das erste Gelenk 22 ist zwischen dem Tragarmstück 16 und dem Zwischenstück 20 angeordnet. Das zweite Gelenk 26 ist zwischen dem Zwischenstück 20 und dem Geräteaufnahmestück 18 angeordnet.

Das Tragarmstück 16 ist fest mit einem Teil des Hauptgelenks 50 verbunden. Über das Hauptgelenk 50 ist das Tragarmstück 16 beweglich mit der Befestigungsvorrichtung 56 verbunden. Das Tragarmstück 16 weist eine Haupterstreckungsrichtung 32 auf, die in einer ersten Projektionsrichtung 66 senkrecht zu der Hauptgelenkachse 72 des Hauptgelenks 50 ausgerichtet ist. Die erste Projektionsrichtung ist dabei senkrecht zu der Befestigungsebene orientiert (vgl. Figur 1).

Ein erstes Gelenkteil des ersten Gelenks 22 ist fest mit dem Tragarmstück 16 verbunden. Ein zweites Gelenkteil des ersten Gelenks 22 ist fest mit dem Zwischenstück 20 verbunden. Über das erste Gelenk 22 ist das Zwischenstück 20 beweglich mit dem Tragarmstück 16 verbunden. Das erste Gelenk 22 weist eine als Drehachse ausgebildete erste Gelenkachse 24 auf. Das erste Gelenk 22 ist als ein Drehgelenk ausgebildet. Die erste Gelenkachse 24 des ersten Gelenks 22 verläuft in axialer Verlängerung des Tragarmstücks 16. Die erste Gelenkachse 24 des ersten Gelenks 22 ist in der ersten Projektionsrichtung 66 achsparallel zu der Haupterstreckungsrichtung 32 des Tragarmstücks 16 orientiert. Die erste Gelenkachse 24 spannt mit der Hauptgelenkachse 72 eine Ebene auf. In der ersten Projektionsrichtung 66 ist die erste Gelenkachse 24 senkrecht zu der Hauptgelenkachse 72 orientiert. Das erste Gelenk 22 führt das Zwischenstück 20 relativ zum Tragarmstück 16 entlang eines Schwenkbereichs.

Ein erstes Gelenkteil des zweiten Gelenks 26 ist fest mit dem Zwischenstück 20 verbunden. Ein zweites Gelenkteil des zweiten Gelenks 26 ist fest mit dem Geräteaufnahmestück 18 verbunden. Über das zweite Gelenk 26 ist das Geräteaufnahmestück 18 beweglich mit dem Zwischenstück 20 verbunden. Das zweite Gelenk 26 weist eine als Drehachse ausgebildete zweite Gelenkachse 28 auf. Das zweite Gelenk 26 ist als ein Drehgelenk ausgebildet. Die zweite Gelenkachse 28 des zweiten Gelenks 26 ist in einer zweiten Projektionsrichtung 70 achsparallel zu einer Haupterstreckungsrichtung 36 des Geräteaufnahmestücks 18 orientiert (vgl. Figur 4). Bei der Verstaustellung des Tragarms 48 ist die Haupterstreckungsrichtung 32 des Tragarmstücks 16 zu der zweiten Gelenkachse 28 des zweiten Gelenks 26 in der ersten Projektionsrichtung 66 versetzt angeordnet. Dabei zeigt die zweite Gelenkachse 28 in die Projektionsrichtung 66 und ist deshalb nicht sichtbar. Das zweite Gelenk 26 führt das Geräteaufnahmestück 18 relativ zum Zwischenstück 20 entlang eines Schwenkbereichs. Die erste Gelenkachse 24 und die zweite Gelenkachse 28 sind dabei in einer dritten Projektionsrichtung 68 in der Verstaustellung des Tragarms 48 rechtwinklig zueinander orientiert (vgl. Figur 2).

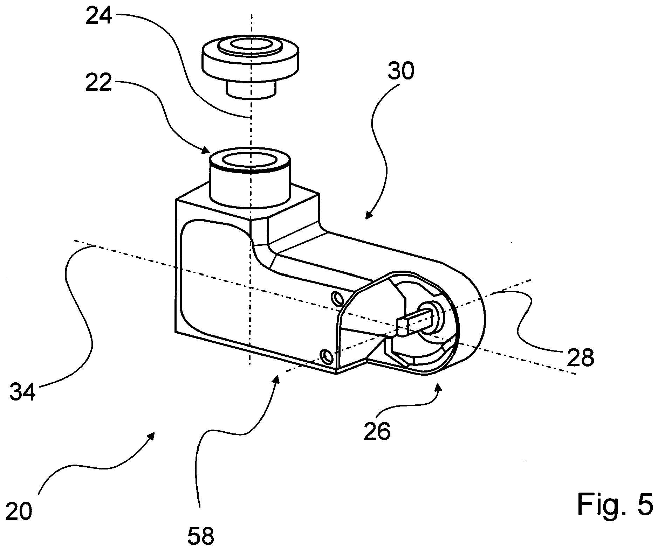

Das Zwischenstück 20 koppelt das Tragarmstück 16 mit dem Geräteaufnahmestück 18. Das Zwischenstück 20 ist zwischen dem Tragarmstück 16 und dem Geräteaufnahmestück 18 angeordnet. Das Zwischenstück 20 weist eine Haupterstreckungsrichtung 34 auf, die in der dritten Projektionsrichtung 68 in der Nutzstellung des Tragarms 48 senkrecht zu der Haupterstreckungsrichtung 32 des Tragarmstücks 16 orientiert ist. Die dritte Projektionsrichtung zeigt dabei in Richtung der Hauptgelenkachse 72 des Hauptgelenks 50. Das Zwischenstück 20 stellt einen Versatz 30 bereit, der die erste Gelenkachse 24 des ersten Gelenks 22 und die zweite Gelenkachse 28 des zweiten Gelenks 26 gegeneinander versetzt (vgl. Figur 5). Durch den Versatz 30 ist die Haupterstreckungsrichtung 32 des Tragarmstücks 16 und damit die erste Gelenkachse 24 zu der Haupterstreckungsrichtung 36 des Geräteaufnahmestücks 18 und damit zu der zweiten Gelenkachse 28 versetzt angeordnet (vgl. Figur 2 und Figur 5). Die beiden Gelenkachsen 24, 28 sind in der zweiten Projektionsrichtung 70 durch den Versatz des Zwischenstücks 20 gegeneinander versetzt. Dabei zeigt die erste Gelenkachse 24 in die Projektionsrichtung 70 und ist deshalb nicht sichtbar.

Das Zwischenstück 20 weist eine Erstreckungslänge entlang seiner Haupterstreckungsrichtung 34 auf. Die beiden Gelenkachsen 24, 28 sind um die Erstreckungslänge gegeneinander versetzt. Die Haupterstreckungsrichtung 34 des Zwischenstücks 20 ist senkrecht zu beiden Gelenkachsen 24, 28 orientiert. Die Haupterstreckungsrichtung 34 des Zwischenstücks 20 spannt mit der Gelenkachse 24 und mit der Gelenkachse 28 jeweils eine Ebene auf. Die beiden Ebenen unterscheiden sich voneinander und sind senkrecht zueinander angeordnet (vgl. Figur 5). Zur Bereitstellung des Versatzes 30 weist das Zwischenstück 20 einen mittleren Teilbereich 58 auf. Der mittlere Teilbereich 58 ist als ein Hohlraum ausgebildet. Das Zwischenstück 20 bildet eine L-Form.

Auf dem Geräteaufnahmestück 18 ist der als Monitor ausgebildete Gegenstand 12 befestigt. Die Haupterstreckungsrichtung 36 des Geräteaufnahmestücks 18 ist in der zweiten Projektionsrichtung 70 senkrecht zu der Haupterstreckungsrichtung 34 des Zwischenstücks 20 (vgl. Figur 4). In der dritten Projektionsrichtung 68 ist die Haupterstreckungsrichtung 36 des Geräteaufnahmestücks 18 in der Verstaustellung des Tragarms 48 senkrecht zu der Haupterstreckungsrichtung 32 des Tragarmstücks 16 orientiert (vgl. Figur 3). Mittels des zweiten Gelenks 26 ist das Geräteaufnahmestück 18 um seine Haupterstreckungsrichtung 36 bzw. um die zweite Gelenkachse 28 zu dem Zwischenstück 20 verschwenkbar. Weiter weist das Geräteaufnahmestück 18 eine Befestigungsfläche 60 auf. Senkrecht auf die Befestigungsfläche 60 ist der als Monitor ausgebildete Gegenstand 12 aufrecht montiert, wobei die Bildschirmebene 44 des als Monitor ausgebildeten Gegenstands 12 in der Nutzstellung in Richtung der Rückenlehne 46 des Sitzes 14 zeigt.

Die Armlehne 38 des Sitzes 14 weist eine Vorderseite 62 auf, an der die Sitzanbauvorrichtung 10 mittels der Befestigungsvorrichtung 56 befestigt bzw. montiert ist. Gemäß Figur 2 versetzt das Zwischenstück 20 in der Nutzstellung das Geräteaufnahmestück 18 relativ zum Tragarmstück 16 in Richtung der Rückenlehne 46 des Sitzes 14 und somit in Richtung des Benutzers.

Grundsätzlich kann das Zwischenstück 20 in der Nutzstellung das Geräteaufnahmestück 18 auch relativ zum Tragarmstück 16 entgegen der Richtung der Rückenlehne 46 des Sitzes 14 und somit entgegen der Richtung des Benutzers versetzen (vgl. Figur 4). In der Figur 4 zeigt die Bildschirmebene 44 des Monitors im Gegensatz zur Figur 2 in Richtung der zweiten Gelenkachse 28. In der Figur 4 ist nur das Tragarmstück 16 in der Nutzstellung und die Bildschirmebene 44 des als Monitor ausgebildeten Gegenstands 12 zeigt nicht in die Richtung des in dem Sitz 14 sitzenden Benutzers. Die Bildschirmebene 44 wird mittels des ersten Gelenks 22 in Richtung des Benutzers gedreht und stellt somit die Nutzstellung des Tragarms 48 ein. Die gestrichelte Darstellung zeigt den Tragarm 48, d.h. das Tragarmstück 16 und das Geräteaufnahmestück 18, in der Nutzstellung.

In einer Vorderansicht, die der ersten Projektionsrichtung 66 entspricht, erfolgt der Versatz 30 bzw. verläuft die Haupterstreckungsrichtung 34 des Zwischenstücks 20 bei montierter Sitzanbauvorrichtung 10 in der Nutzstellung somit teilweise entlang der Projektionsrichtung 66 und ist damit nur teilweise sichtbar. In einer Draufsicht auf den Sitz mit der montierten Sitzanbauvorrichtung 10, die der zweiten Projektionsrichtung 70 entspricht, erfolgt der Versatz 30 bzw. verläuft die Haupterstreckungsrichtung 34 des Zwischenstücks 20 in der Nutzstellung senkrecht und quer zur Projektionsrichtung 70 (vgl. Figur 4). Sie liegt damit senkrecht und vertikal zu einer Flugrichtung. Die zweite Projektionsrichtung 70 zeigt in Richtung einer Sitzfläche 64 des Sitzes 14. In einer Seitenansicht, die der dritten Projektionsrichtung 68 entspricht, erfolgt der Versatz 30 bzw. die Haupterstreckungsrichtung 34 des Zwischenstücks 20 der montierten Sitzanbauvorrichtung 10 in der Verstaustellung entlang der Projektionsrichtung 68 und ist damit nicht sichtbar.

In diesem Ausführungsbeispiel verläuft die Hauptgelenkachse 72 des Hauptgelenks 50 quer zur Flugrichtung des die Sitzanbauvorrichtung 10 aufweisenden Flugzeugs. Der Schwenkbereich 52 des Hauptgelenks 50, bezogen auf die erste Gelenkachse 22, weist in diesem Ausführungsbeispiel einen Wert von 165 Grad auf, wobei die erste Gelenkachse 22 in der Verstaustellung einen Wert von null Grad definiert. Die Erstreckungslänge des Zwischenstücks 20 beträgt ca. 40 mm.

Alternativ zu der dargestellten Befestigung der Sitzanbauvorrichtung 10 an der Vorderseite 62 der Armlehne 38 des Sitzes 14 kann die Sitzanbauvorrichtung 10 teilweise innerhalb der Armlehne 38 des Sitzes 14 angeordnet werden. In der Verstaustellung ist dabei die gesamte Sitzanbauvorrichtung 10 in der Armlehne 38 verstaut. In der Nutzstellung befindet sich der Tragarm 48 teilweise außerhalb der Armlehne 38, wobei das Hauptgelenk 50 weiterhin innerhalb der Armlehne 38 liegt.

**Bezugszeichen**

| | | | |
|---|---|---|---|
| 10 | Sitzanbauvorrichtung | 56 | Seite / Befestigungsvorrichtung |
| 12 | Gegenstand | 58 | mittlerer Teilbereich |
| 14 | Sitz | 60 | Befestigungsfläche |
| 16 | Tragarmstück | 62 | Vorderseite |
| 18 | Geräteaufnahmestück | 64 | Sitzfläche |
| 20 | Zwischenstück | 66 | Projektionsrichtung |
| 22 | erstes Gelenk | 68 | Projektionsrichtung |
| 24 | erste Gelenkachse | 70 | Projektionsrichtung |
| 26 | zweites Gelenk | 72 | Hauptgelenkachse |
| 28 | zweite Gelenkachse | | |
| 30 | Versatz | | |
| 32 | Haupterstreckungsrichtung des Tragarms | | |
| 34 | Haupterstreckungsrichtung des Zwischenstücks | | |
| 36 | Haupterstreckungsrichtung des Geräteaufnahmestücks | | |
| 38 | Armlehne | | |
| 40 | Sitzfuß | | |
| 42 | Boden | | |
| 44 | Bildschirmebene | | |
| 46 | Rückenlehne | | |
| 48 | Tragarm | | |
| 50 | Hauptgelenk | | |
| 52 | Schwenkbereich | | |
| 54 | Hauptgelenkgehäuse | | |

## Patentansprüche

1. Sitzanbauvorrichtung, insbesondere Fluggastsitzanbauvorrichtung, zur beweglichen Befestigung eines Gegenstands (12) an einem Sitz (14), mit einem Tragarmstück (16), mit einem Geräteaufnahmestück (18) zur Befestigung des Gegenstands (12), mit einem Zwischenstück (20) zur Kopplung des Geräteaufnahmestücks (18) mit dem Tragarmstück (16), sowie mit zumindest einem ersten, zwischen dem Tragarmstück (16) und dem Zwischenstück (20) angeordneten Gelenk (22), das eine erste Gelenkachse (24) aufweist, und zumindest einem zweiten, zwischen dem Zwischenstück (20) und dem Geräteaufnahmestück (18) angeordneten Gelenk (26), das eine zweite Gelenkachse (28) aufweist, wobei das Zwischenstück (20) einen Versatz (30) bereitstellt, der die erste Gelenkachse (24) des ersten Gelenks (22) und die zweite Gelenkachse (28) des zweiten Gelenks (26) in zumindest einer Projektionsrichtung (70) gegeneinander versetzt, wobei die beiden Gelenkachsen keinen gemeinsamen Schnittpunkt haben, **dadurch gekennzeichnet, dass** das Geräteaufnahmestück (18) eine Haupterstreckungsrichtung (36) aufweist, die in zumindest einer Projektionsrichtung (70) achsparallel zu der zweiten Gelenkachse (28) des zweiten Gelenks (26) orientiert ist.

2. Sitzanbauvorrichtung nach Anspruch 1, **dadurch gekennzeichnet, dass** die beiden Gelenkachsen (24, 28) in zumindest einer Projektionsrichtung (68) rechtwinklig zueinander orientiert sind.

3. Sitzanbauvorrichtung nach Anspruch 1 oder 2, **dadurch gekennzeichnet, dass** das Tragarmstück (16) eine Haupterstreckungsrichtung (32) aufweist, zu der die zweite Gelenkachse (28) des zweiten Gelenks (26) in zumindest einer Projektionsrichtung (66) versetzt angeordnet ist.

4. Sitzanbauvorrichtung nach Anspruch 3, **dadurch gekennzeichnet, dass** das Zwischenstück (20) eine Haupterstreckungsrichtung (34) aufweist, die in zumindest einer Projektionsrichtung (66) senkrecht zu der Haupterstreckungsrichtung (32) des Tragarmstücks (16) orientiert ist.

5. Sitzanbauvorrichtung nach Anspruch 3, **dadurch gekennzeichnet, dass** die erste Gelenkachse (24) des ersten Gelenks (22) und die Haupterstreckungsrichtung (32) des Tragarmstücks (16) in zumindest einer Projektionsrichtung (68) achsparallel zueinander orientiert sind.

6. Sitzanbauvorrichtung nach einem der vorhergehenden Ansprüche, **dadurch gekennzeichnet, dass** die Haupterstreckungsrichtung (34) des Zwischenstücks (20) in zumindest einer Projektionsrichtung (70) senkrecht zu der Haupterstreckungsrichtung (36) des Geräteaufnahmestücks (18) orientiert ist.

7. Sitzanbauvorrichtung nach einem der vorhergehenden Ansprüche, **dadurch gekennzeichnet, dass** das erste Gelenk (22) und das zweite Gelenk (26) zumindest teilweise fest mit dem Zwischenstück (20) verbunden sind.

8. Sitzanbauvorrichtung nach Anspruch 1, **dadurch gekennzeichnet, dass** das zumindest erste Gelenk (22) und das zumindest zweite Gelenk (26) als Drehgelenke und deren Gelenkachsen (24, 28) als Drehachsen ausgebildet sind.

9. Sitz, insbesondere Fluggastsitz, mit einer Sitzanbauvorrichtung nach einem der Ansprüche 1 bis 8.

## Claims

1. Seat attachment device, in particular flight passenger seat attachment device, for movably fixating an object (12) to a seat (14), with a support arm piece (16), with an apparatus-accommodating piece (18) for fixating the object (12), with an intermediate piece (20) for coupling the apparatus-accommodating piece (18) to the support arm piece (16), and with at least one first articulation (22) arranged between the support arm piece (16) and the intermediate piece (20) and comprising a first articulation axis (24), and with at least one second articulation (26) arranged between the intermediate piece (20) and the apparatus-accommodating piece (18) and comprising a second articulation axis (28),
the intermediate piece (20) providing an offset (30) which offsets the first articulation axis (24) of the first articulation (22) and the second articulation axis (28) of the second articulation (26) with respect to each other in at least one projection direction (70), wherein the two articulation axes do not share an intersection point, **characterised in that**
the apparatus-accommodating piece (18) has a main extension direction (36) which is oriented axially parallel to the second articulation axis (28) of the second articulation (26).

2. Seat attachment device according to claim 1,
**characterised in that**
the two articulation axes (24, 28) are oriented at right angles to each other in at least one projection direction (68).

3. Seat attachment device according to claim 1 or 2,
**characterised in that**
the support arm piece (16) has a main extension direction (32), offset to which the second articulation axis (28) of the second articulation (26) is arranged.in at least one projection direction (66).

4. Seat attachment device according to claim 3,
**characterised in that**
the intermediate piece (20) has a main extension direction (34) which is oriented at right angles to the main extension direction (32) of the support arm piece (16) in at least one projection direction (66).

5. Seat attachment device according to claim 3,
**characterised in that**
the first articulation axis (24) of the first articulation (22) and the main extension direction (32) of the support arm piece (16) are oriented axially parallel to each other in at least one projection direction (68).

6. Seat attachment device according to one of the preceding claims,
**characterised in that**
the main extension direction (34) of the intermediate piece (20) is oriented at right angles to the main extension direction (36) of the apparatus-accommodating piece (18) in at least one projection direction (70).

7. Seat attachment device according to one of the preceding claims,
**characterised in that**
the first articulation (22) and the second articulation (26) are at least partly fixedly connected to the intermediate piece (20).

8. Seat attachment device according to claim 1,
**characterised in that**
the at least one first articulation (22) and the at least one second articulation (26) are implemented as rotary articulations and their articulation axes (24, 28) are implemented as rotary axes.

9. Seat, in particular flight passenger seat, with a seat attachment device according to one of claims 1 to 8.

## Revendications

1. Dispositif accessoire de siège, notamment dispositif accessoire de siège de passager d'aéronef, pour la fixation mobile d'un objet (12) à un siège (14), avec un élément de bras supportant (16), avec un élément à l'accommodation d'appareils (18) pour fixer l'objet (12), avec un élément intermédiaire (20) pour accrocher l'élément à l'accommodation d'appareils (18) à l'élément de bras supportant (16), et avec au moins une première articulation (22) disposée entre l'élément de bras supportant (16) et l'élément intermédiaire (20) et comportant un premier axe d'articulation (24), et avec au moins une deuxième articulation (26) disposée entre l'élément intermédiaire (20) et l'élément à l'accommodation d'appareils (18) et comportant un deuxième axe d'articulation (28),
l'élément intermédiaire (20) fournissant une décalage (30), laquelle décale le premier axe d'articulation (24) de la première articulation (22) et le deuxième axe d'articulation (28) de la deuxième articulation (26) l'un contre l'autre dans au moins une direction de projection (70), les deux axes d'articulation n'ayant pas de point d'intersection commun,
**caractérisé en ce que**
l'élément à accommodation d'appareils (18) ayant une direction d'extension principale (36) orientée co-axialement avec l'articulation deuxième (28) de l'articulation deuxième (26) dans au moins une direction de projection (70).

2. Dispositif accessoire de siège selon la revendication 1,
**caractérisé en ce que**
les deux axes d'articulation (24, 28) sont orientées à angle droit l'un à l'autre dans au moins une direction de projection (68).

3. Dispositif accessoire de siège selon la revendication 1 ou 2,
**caractérisé en ce que**
l'élément de bras supportant (16) comporte une direction d'extension principale (32), par rapport à laquelle le deuxième axe d'articulation (28) de la deuxième articulation (26) est disposé en décalage dans au moins une direction de projection (66).

4. Dispositif accessoire de siège selon la revendication 3,
**caractérisé en ce que**
l'élément intermédiaire (20) comporte une direction d'extension principale (34) orientée à angle droit à la direction d'extension principale (32) de l'élément de bras supportant (16) dans au moins une direction de projection (66).

5. Dispositif accessoire de siège selon la revendication 3,
**caractérisé en ce que**
le premier axe d'articulation (24) de la première articulation (22) et la direction d'extension principale (32) de l'élément de bras supportant (16) sont orientés coaxialement l'un par rapport à l'autre dans au moins une direction de projection (68).

6. Dispositif accessoire de siège selon l'une quelconque des revendications précédentes,
**caractérisé en ce que**
la direction d'extension principale (34) de l'élément intermédiaire (20) est orientée à angle droit à la direction d'extension principale (36) de l'élément à accommodation d'appareils (18) dans au moins une direction de projection (70).

7. Dispositif accessoire de siège selon l'une quelconque des revendications précédentes,
**caractérisé en ce que**
la première articulation (22) et la deuxième articulation (26) sont au moins partiellement connectées fixement avec l'élément intermédiaire (20).

8. Dispositif accessoire de siège selon la revendication 1,
**caractérisé en ce que**
l'au moins la première articulation (22) et l'au moins la deuxième articulation (26) sont implémentées comme des articulations rotatives et leurs axes d'articulation (24, 28) sont implémentés comme d'axes rotatifs.

9. Siège, notamment siège de passager d'aéronef, avec un dispositif accessoire de siège selon l'une quelconque des revendications 1 à 8.
